# EUROPÄISCHE PATENTSCHRIFT

(11) **EP 4 114 730 B1**
(45) Veröffentlichungstag und Bekanntmachung des Hinweises auf die Patenterteilung: **11.09.2024**
(21) Anmeldenummer: 21714094.6
(22) Anmeldetag: 03.03.2021
(51) Int. Cl.: B64D 11/06

(54) **TISCHPLATTE FÜR EINEN FLUGGASTSITZ**
TABLE PANEL FOR AN AIRCRAFT PASSENGER SEAT
TABLETTE POUR SIÈGE PASSAGER D'AVION

(30) Priorität: 05.03.2020 DE 102020106028
(43) Veröffentlichungstag der Anmeldung: 11.01.2023
(73) Patentinhaber: ZIM Aircraft Seating GmbH, 88090 Immenstaad am Bodensee (DE)
(72) Erfinder: SZYDELKO, Lukasz, 74523 Schwäbisch Hall (DE)
(74) Vertreter: Otten, Roth, Dobler & Partner mbB Patentanwälte
(86) Internationale Anmeldenummer: PCT/EP2021/055334
(87) Internationale Veröffentlichungsnummer: WO 2021/175921

(56) Entgegenhaltungen:
- WO-A1-2015/143021
- WO-A2-2016/038554
- GB-A- 2 541 660
- US-B2- 9 969 311

## Beschreibung

### Stand der Technik

Zur Ausstattung von Luftfahrzeugen zum Personentransport wie Passagierflugzeugen sind Fluggastsitze bzw. Sitzreihen mit üblicherweise mehreren Fluggastsitzen in einer Vielzahl von Ausführungsformen bekannt. Ein Sitzplatz eines Fluggastsitzes weist einen Sitzboden und eine Rückenlehne auf, wobei regelmäßig zwei oder mehr Fluggastsitze fluchtend nebeneinander zu einer Sitzreihe verbunden sind.

Bei der Konzeption eines Fluggastsitzes ist zu beachten, dass ein hoher Nutz- und Bedienkomfort gegeben ist, zum Beispiel mit verschiedenen Funktionen auf engstem Raum und unter Einhaltung von grundlegenden Sicherheitsstandards. Außerdem ist unter wirtschaftlichen und ökologischen Gesichtspunkten ein effektiver Einsatz der Ressourcen erwünscht.

Die WO 2015/143021 offenbart eine dreidimensionale Gitterplattenstruktur mit einer Vielzahl von gegenseitig versetzten Löchern, die in einer jeweiligen voneinander beabstandeten Ober- und Unterseite einer Platte ausgebildet sind. Zum Stand der Technik werden auch die WO 2016/038554 A2 und die GB 2541660 A genannt.

### Aufgabe und Vorteile der Erfindung

Aufgabe der vorliegenden Erfindung ist es, einen verbesserten Fluggastsitz bereitzustellen, welcher insbesondere im Hinblick auf den Nutz- und Bedienkomfort bei Berücksichtigung von wirtschaftlichen Aspekten und Sicherheitsstandards vorteilhaft ausgebildet ist.

Diese Aufgabe wird durch die Merkmale des Anspruchs 1 sowie des Anspruchs 11 gelöst.

Weiterentwicklungen der Erfindung sind in den abhängigen Ansprüchen dargelegt.

Die Erfindung geht aus von einer Tischplatte für einen Fluggastsitz, insbesondere Fluggastsitz-Tischplatte, wobei die Tischplatte ein Plattenbauteil mit zwei gegenüberliegenden Hauptseiten umfasst, wobei das Plattenbauteil zumindest im Wesentlichen eine Dicken-Abmessung und eine Grundrissfläche der Tischplatte vorgibt, und wobei die Hauptseiten von einem Bauteil-Rand mit geraden Randabschnitten begrenzt sind. Solche Tischplatten bestehen vorzugsweise aus einem Kunststoff-, Metall- oder Verbundwerkstoff. Die Tischplatte ist regelmäßig als Anbauteil an einem Fluggastsitz auf dessen Rückseite insbesondere aus einer aufrechten Verstaustellung am Fluggastsitz in eine horizontale Nutzstellung umbaubar vorhanden, für die Nutzung durch einen Fluggast, der in der Sitzreihe hinter dem betreffenden Fluggastsitz sitzt.

Der Kern der Erfindung liegt darin, dass das Plattenbauteil eine Vielzahl von voneinander getrennten Materialausnehmungen aufweist, so dass bezogen auf eine in der Dicke und der Grundrissfläche dem Plattenbauteil entsprechende Vollmaterialplatte, die ein Ausgangs-Volumen des Vollmaterials aufweist, das Plattenbauteil eine reduzierte Masse aufweist, wobei die Materialausnehmungen auf eine Hauptseite des Plattenbauteils bezogen jeweils offen sind und wobei die Summe der Volumen sämtlicher Materialausnehmungen in dem Plattenbauteil ein Ausnehmungs-Volumen des Plattenbauteils ergeben, wobei das Ausnehmungs-Volumen des Plattenbauteils mindestens 20 Prozent des Ausgangs-Volumens beträgt. Die Ausnehmungsvolumina sind vorzugsweise materialfreie Bereiche, gegebenenfalls gasgefüllt zum Beispiel luftgefüllt. Damit wird bei vergleichbarer Stabilität der erfindungsgemäßen Tischplatte verglichen mit der Stabilität der Tischplatte ohne Materialausnehmungen bzw. mit der Vollmaterial-Tischplatte im Ausgangszustand ein um mindestens 20 Prozent geringeres Gewicht bzw. eine geringere Masse der Tischplatte erreicht. Bei einer Vielzahl von z. B. mehreren hundert Fluggastsitzen in einem Passagierflugzeug wird ein wirtschaftlicher Vorteil erzielt bzw. eine deutliche Gewichtsersparnis für das Flugzeug erreicht und ein damit verbundener ökologischer Vorteil aufgrund eines geringeren Materialverbrauchs gegenüber einer zum Beispiel aus einem Aluminiumwerkstoff bestehenden Vollmaterial-Tischplatte. Die hohe mechanische Stabilität der erfindungsgemäßen Tischplatte wird durch die vorteilhaft ausgebildeten Materialausnehmungen erreicht. Ein damit einhergehender geringerer Kraftstoffverbrauch des Flugzeugs aufgrund der Gewichtseinsparung führt zu einem weiteren insbesondere ökologischen Vorteil hinsichtlich der verbesserten Energie- bzw. Gesamt-Ökobilanz.

Die Materialausnehmungen im Plattenbauteil sind mit vergleichsweise dünnen Wandungen von verbleibendem Material gebildet, die zwischen benachbarten Materialausnehmungen vorhanden sind. Damit ist eine hohe Stabilität der Tischplatte realisiert. Die Wände der Materialausnehmungen, die sich quer zu den Hauptseiten bzw. über die Tiefe der Materialausnehmungen erstrecken sind vorzugsweise abschnittsweise fensterartig offen also nicht flächig geschlossen und nur von schmalen Materialbrücken unterbrochen. Die Materialausnehmungen bilden vorteilhaft eine Art Wabenstruktur mit vergleichsweise viel Hohlraum und wenig versteifenden Materialbrücken im bzw. des Plattenbauteils. Die Wände der von den Materialausnehmungen gebildeten Waben bzw. Hohlbereiche durch die stehenbleibenden zum Teil dünnen bzw. schmalen Wandabschnitte und Bodenabschnitten der Materialausnehmungen bilden Materialbereiche, die insgesamt in sämtliche Raumrichtungen versteifend wirken auf die Gesamtstruktur der erfindungsgemäßen Tischplatte.

Vorzugsweise beträgt das Ausnehmungs-Volumen der Materialausnehmungen des Plattenbauteils in Summe mindestens 30 Prozent des Ausgangs-Volumens, vorzugsweise mindestens 40 Prozent des Ausgangs-Volumens, vorzugsweise mindestens 50 Prozent des Ausgangs-Volumens, vorzugsweise mindestens 60 Prozent des Ausgangs-Volumens. Die Materialausnehmungen sind vorzugsweise aus einem Voll-Plattenmaterial, das komplett über das Ausgangsvolumen durch Plattenmaterial gebildet ist, nachträglich herausgearbeitet bzw. durch spanabhebende Bearbeitung wie Ausfräsungen im Plattenmaterial hergestellt. Die Materialausnehmungen sind vorzugsweise geschlossen bzw. ohne Verbindung zum außenseitigen schmalseitigen Plattenbauteilrand zwischen den beiden Flächen- bzw. Hauptseiten. Die Materialausnehmungen sind zum Beispiel längliche gerade Materialausnehmungen. Vorzugsweise sind sämtliche Materialausnehmungen durch einen Materialabschnitt des Plattenbauteils getrennt, z. B. als Materialbrücke. Das Plattenbauteil, zum Beispiel ein Gussteil oder Spritzgussteil ist vorzugsweise einstückig aus einem Metallmaterial z.B. aus einem Leichtmetall-Material.

Eine bzw. vorzugsweise jede Materialausnehmung weist gegenüberliegende Längswände auf, die eine konturierte Form zeigen. Die konturierte Form weist insbesondere regelmäßig sich abwechselnde bzw. alternierende nach innen in die Materialausnehmung etwas hineinstehende Abschnitte und daneben etwas zurückversetzte Abschnitte auf. Eine Materialausnehmung weist außerdem einen Boden mit zum Beispiel ebener Bodenfläche auf, vorzugsweise parallel zu den flächigen Außen- bzw. Hauptseiten. Über die Bodenfläche sind die gegenüberliegenden Längswände miteinander verbunden.

Die Materialausnehmungen sind vorzugsweise auf beiden gegenüberliegenden Hauptseiten des Plattenbauteils in entsprechender Ausgestaltung aber lateral bzw. quer zur Längserstreckung versetzt vorhanden. Zumindest mehrere der Materialausnehmungen auf einer ersten Hauptseite sind nebeneinander und untereinander parallel ausgerichtet. Auf der anderen gegenüberliegenden flächigen zweiten Außen- bzw. Hauptseite des Plattenbauteils sind die Materialausnehmungen untereinander auch parallel und entsprechend der Richtung der Materialausnehmungen auf der ersten Hauptseite verlaufen, jedoch jeweils lateral versetzt. Damit ist sichergestellt, dass die Materialausnehmungen auf der ersten Hauptseite und auf der zweiten Hauptseite sich nicht überschneiden bzw. nicht ineinandergreifen. Durch die Konturierung der Längsränder gibt es lediglich fensterartige Freilassungen in den Wandungen aller Materialausnehmungen.

Anders ausgedrückt sind die Materialausnehmungen auf der ersten Hauptseite im streifenförmigen materialbehafteten Zwischenraum zwischen zwei benachbarten Materialausnehmungen der Materialausnehmungen auf der anderen Hauptseite vorhanden. Auf diese Weise ist der geschlossene Boden aller Materialausnehmungen realisierbar.

Vorteilhafterweise sind die Materialausnehmungen nach einem Muster ausgebildet, insbesondere sind die Materialausnehmungen nach einem regelmäßigen Muster ausgebildet. Zum Beispiel nach einem Muster mit parallel verlaufenden Materialausnehmungen bezogen auf eine Flächenseite bzw. Hauptseite des Plattenbauteils. Vorzugsweise sind mehrere parallele Materialausnehmungen auf einer Hauptseite des Plattenbauteils vorhanden. Die Parallelität der Materialausnehmungen bildet sich in einem Bereich bzw. zum Beispiel einer Hälfte und eine weitere Parallelität von mehreren Materialausnehmungen auf der anderen Hälfte. Das Muster kann ein regelmäßiges Muster bzw. ein auf die Hauptseite bezogen symmetrisches Muster sein, zum Beispiel als Fischgrätenmuster ausgebildet sein, oder unregelmäßig gestaltet sein.

Das mit den Materialausnehmungen gebildete Muster bedeutet insbes. sich wiederholende Strukturen bzw. deren regelmäßige Anordnung. Die Materialausnehmungen sind vorzugsweise aus dem Platten-Vollmaterial nachträglich herausgearbeitet, z. B. herausgefräst. Das Plattenbauteil ist in der Grundform vorzugsweise viereckig mit zwei ersten und zwei zweiten gegenüberliegenden geraden bzw. zueinander parallelen Randabschnitten. Eine Tiefe der Materialausnehmungen ergibt sich in Richtung der Dickenabmessung des Plattenbauteils vorzugsweise etwas geringer als eine Dicke des Plattenbauteils. Die Materialausnehmungen reichen in Längsrichtung mit einem Abstand bis nahe an einen geraden Randabschnitt heran. Die Materialausnehmungen unterscheiden sich in der Länge der Erstreckung in Längsrichtung der jeweiligen Materialausnehmung voneinander. Das Muster umfasst zum Beispiel zumindest angenähert gerade bzw. linear ausgerichtete bzw. längliche oder linienförmige oder abgewinkelte schmale nutartige Materialausnehmungen. Ein Boden der jeweiligen Materialausnehmung bleibt erhalten zum Beispiel mit einer Dicke des Bodens im Millimeterbereich. Die Seite des Bodens, die der Materialausnehmung zugewandt ist, weist eine gegenüberliegende Seite auf, welche einen Teil eines stehenbleibenden bzw. nicht herausgefrästen Bereichs der anderen Hauptseite des Plattenbauteils bildet.

Auch ist es von Vorteil, wenn mehrere in der Grundrissform längliche Materialausnehmungen vorgesehen sind. Dies ist insbesondere herstellungstechnisch vorteilhaft.

Das von den Materialausnehmungen gebildete Muster umfasst zumindest angenähert längliche bzw. linienförmige schmale nutartige Materialausnehmungen. Die Materialausnehmungen weisen untereinander vorzugsweise die gleiche Form bzw. eine gleiche Breitenabmessung auf. Die Materialausnehmungen sind vorzugsweise in der Ausgestaltung untereinander identisch. In der Länge sind benachbarte Materialausnehmungen regelmäßig unterschiedlich bzw. jeweils abhängig von der Längsausrichtung relativ zu den Randabschnitten. Auf einer Hauptseite eines Plattenbauteils sind zum Beispiel acht oder neun untereinander parallele Materialausnehmungen auf einer ersten Hälfte der Hauptseite vorhanden und acht oder neun untereinander parallele Materialausnehmungen auf der zweiten Hauptseite vorhanden.

Die Materialausnehmungen sind in Längsrichtung betrachtet vorzugsweise schräg zu gegenüberliegenden geraden Randabschnitten des Bauteil-Randes ausgerichtet.

Zwischen zwei benachbarten Materialausnehmungen, also offenen Stellen der Hauptseite, ist ein Oberflächen-Bereich der Hauptseite in einer Breite einer Materialausnehmung flächig bzw. geschlossen vorhanden.

Eine vorteilhafte Variante zeichnet sich dadurch aus, dass die Materialausnehmungen in Längsrichtung der jeweiligen Materialausnehmung winklig zu einem geraden Randabschnitt des Bauteil-Randes ausgerichtet sind. Dies trägt zu einer hohen mechanischen Stabilität des Plattenbauteils bei.

Ein gerader Randabschnitt des Bauteil-Randes erstreckt sich über eine Länge und/oder eine Breite des Plattenbauteils.

Es ist alternativ vorteilhaft, dass die Materialausnehmungen zu beiden gegenüberliegenden Hauptseiten des Plattenbauteils offen sind. Diese in Dickenrichtung des Plattenbauteils durchgehend gelochte oder geschlitzte Ausbildungsvariante des Plattenbauteils stellt eine Alternative zu den mit einem verbleibenden Boden versehenen Materialausnehmungen dar, die zu genau einer Hauptseite offen sind bzw. zu den einseitig geschlossenen Materialausnehmungen auf einer Hauptseite und anderen Materialausnehmungen, die auf der anderen Hauptseite zu dieser offen sind. Grundsätzlich sind an einem Plattenbauteil auch beide Varianten realisierbar.

Eine andere vorteilhafte Ausbildung ergibt sich dadurch, dass eine Hauptseite zwei Bereiche umfasst, wobei ein erster Bereich mehrere erste Materialausnehmungen aufweist, die untereinander gleich ausgerichtet sind, und wobei ein zweiter Bereich mehrere zweite Materialausnehmungen aufweist, die untereinander gleich ausgerichtet sind, wobei die Ausrichtung der Materialausnehmungen im ersten Bereich unterschiedlich ist zur Ausrichtung der Materialausnehmungen im zweiten Bereich.

Vorzugsweise sind auf einer ersten Hälfte einer Hauptseite des Plattenbauteils mehrere parallele Materialausnehmungen in unterschiedlicher Länge vorhanden, vorzugsweise in Längsrichtung bis jeweils mit Abstand an einen Bauteilrand nahe heranreichend zum Beispiel mit einem Abstand von mehreren Millimetern. Auf der anderen bzw. zweiten Hälfte der gleichen Hauptseite des Plattenbauteils sind ebenfalls mehrere parallele Materialausnehmungen in unterschiedlicher Länge vorhanden, vorzugsweise in Längsrichtung mit Abstand bis jeweils nahe an einen Bauteilrand heranreichend, wobei die Längsrichtung der Materialausnehmungen auf der ersten Hälfte winklig zur Längsrichtung der Materialausnehmungen auf der zweiten Hälfte ausgerichtet sind, vorzugsweise um circa 90 Winkelgrade winklig stehend. So ergibt sich eine Art Fischgrätenstruktur auf der betreffenden Hauptseite des Plattenbauteils.

Die gegenüberliegende Hauptseite des Plattenbauteils weist vorzugsweise eine entsprechende Struktur der Materialausnehmungen auf. Vorzugsweise sind die Materialausnehmungen auf der einen Hauptseite des Plattenbauteils parallel zu den jeweils gegenüberliegenden Materialausnehmungen auf dem betreffenden Bereich auf der anderen bzw. gegenüberliegenden Hauptseite des Plattenbauteils. Vorzugsweise sind die Materialausnehmungen um die Breite der jeweiligen untereinander vorzugsweise zur Erstreckung der Hauptebene gleichbreiten Materialausnehmung quer zur Längsrichtung der Materialausnehmungen versetzt zur gegenüberliegenden Hauptseite. Damit bleiben auf beiden außenliegenden Hauptseiten ursprüngliche Flächenbereiche erhalten, also außenseitig als Teil der ursprünglich vollflächigen Hauptseite.

Vorteilhaft ist es, wenn die Materialausnehmungen materialfrei sind. Die Materialausnehmungen sind vorzugsweise nicht mit einem festen Material zum Beispiel nachträglich ausgefüllt bzw. zum Beispiel lediglich mit einem Gas wie Luft gefüllt. Alternativ können einzelne oder alle Materialausnehmungen gefüllt z. B. geschäumt sein.

Auch ist es von Vorteil, dass auf beiden gegenüberliegenden Hauptseiten des Plattenbauteils jeweils mehrere Materialausnehmungen vorhanden sind. Damit lässt sich eine erhebliche Gewichtsreduzierung erreichen bei hoher Bauteil-Stabilität.

Die Materialausnehmungen reichen auf die jeweilige Hauptseite bezogen in der Tiefe bzw. in Richtung der Dickenabmessung der Tischplatte vorzugsweise nicht bis zur gegenüberliegenden Hauptseite, weisen also einen Restboden auf. Die Dicke des Restbodens beträgt einheitlich vorzugsweise zum Beispiel zwischen 5 und 15 Prozent der Dicke des Plattenbauteils.

Gemäß einer vorteilhaften Modifikation weist eine Hauptseite eine flächige Überdeckung auf, vorzugsweise weisen beide Hauptseiten eine Überdeckung wie z. B. ein Abdeckelement auf. Dadurch ist eine einheitlich geschlossene Oberfläche gebildet, insbesondere unter Abdeckung der Materialausnehmungen. Damit wird eine geschlossene ebene Nutzfläche an der Tischplatte für die zweckmäßige Nutzung als Tischplatte bereitgestellt. Das Plattenbauteil bildet demnach ein Basiselement der fertigen Tischplatte. Bei der fertigen Tischplatte ist zusätzlich zum Plattenbauteil mit den Materialausnehmungen noch beidseitig die z. B. dünne flächig geschlossene Überdeckung oder Abdeckung aufgebracht zum Beispiel aufgeklebt. Das Material bzw. das Gewicht der Überdeckung macht nur einen verschwindenden Bruchteil der Summe des aus dem Plattenbauteil herausgenommenen Materials gemäß der Materialausnehmungen aus.

Vorzugsweise weisen beide gegenüberliegenden Hauptseiten des Plattenbauteils eine Überdeckung auf.

Darüber hinaus stellt sich ein Vorteil ein, wenn an der Tischplatte ein Anbindungsabschnitt für die Anbindung eines Beschlags vorgesehen ist, wobei der Beschlag zur beweglichen Lagerung der Tischplatte an einer Aufnahme ausgebildet ist. Damit kann die Tischplatte über den Beschlag an einer Aufnahme für die Tischplatte wie z. B. an einer Umhausung des Fluggastsitzes vorzugsweise gelenkig bewegbar angebracht werden. Die Tischplatte lässt sich damit an der Rückseite des dazugehörigen Fluggastsitzes in eine platzsparende an der Umhausung aufrechte hochgeklappte Verstaustellung bringen bzw. reversibel in eine zur Rückseite des Fluggastsitzes z. B. horizontal ausgerichtete Nutzstellung bringen.

Vorteilhaft ist es, wenn zwei getrennte und gelenkig miteinander verbundene Plattenbauteile vorhanden sind. Die beiden Plattenbauteile bilden die Tischplatte bzw. sind eine zweiteilige Variante des Plattenbauteils. Damit kann die Nutzfläche der Tischplatte variabel gewählt werden.

Ein erstes Plattenbauteil und ein zweites Plattenbauteil sind vorzugsweise gelenkig miteinander verbunden, wobei das erste Plattenbauteil einen Beschlag bzw. Anbringmittel zur Anbringung der Tischplatte an einem Aufnahmeabschnitt eines Fluggastsitzes wie einer Fluggastsitz-Rückseite aufweist. Zwischen dem erstem und dem zweitem Plattenbauteil sind vorzugsweise Gelenkmittel vorhanden, wobei eine Gelenkachse der Gelenkmittel parallel zu den jeweiligen einander zugewandten Rändern der beiden Plattenbauteile ausgerichtet ist. Damit können die beiden Plattenbauteile parallel aufeinanderliegend zusammengeklappt werden und in eine aufgeklappte zueinander fluchtende ebene Ausrichtung gebracht werden, wie bei üblichen Fluggastsitz-Klapptischen.

Die Erfindung erstreckt sich zudem auf einen Fluggastsitz mit einer Tischplatte nach einem der vorhergehend diskutierten Ausgestaltungen.

Damit lassen sich die beschriebenen Vorteile an dem Fluggastsitz realisieren.

### Figurenbeschreibung

Nachfolgend sind weitere Merkmale und Vorteile der Erfindung anhand eines schematisch dargestellten Ausführungsbeispiels näher erläutert.

Im Einzelnen zeigt:
- Fig. 1: in einer perspektivischen Ansicht schräg von vorne eine Sitzreihe mit zwei Fluggastsitzen jeweils umfassend einen Sitzboden, eine Rückenlehne samt rückseitiger Umhausung und eine Beinauflage,
- Fig. 2: die Sitzreihe gemäß Figur 1 in einer perspektivischen Ansicht von schräg hinten,

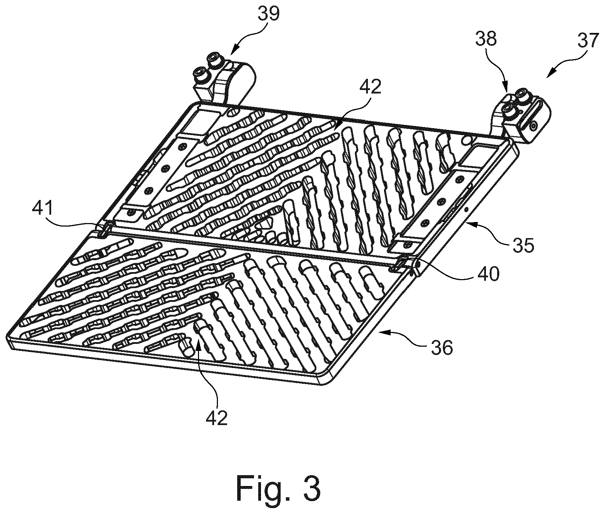

- Fig. 3: zwei gelenkig verbundene Plattenbauteile einer Tischplatte für die Fluggastsitze gemäß der Fig. 1 und 2 ohne Abdeckelemente auf den Plattenbauteilen und mit einem Beschlag,

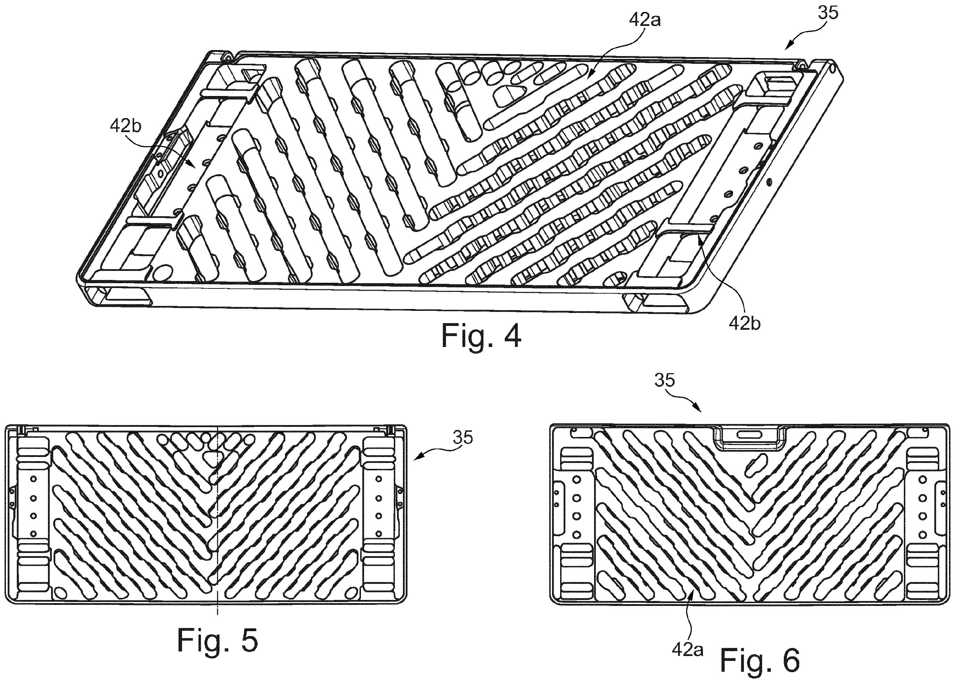

- Fig. 4: ein erstes Plattenbauteil der Plattenbauteile gemäß Fig. 3 in perspektivischer Darstellung ohne Beschlag,
- Fig. 5: das Plattenbauteil gemäß Fig. 4 von oben,
- Fig. 6: das Plattenbauteil gemäß Fig. 4 von unten,
- Fig. 7: ein zweites Plattenbauteil der Plattenbauteile gemäß Fig. 3 in perspektivischer Darstellung,
- Fig. 8: das Plattenbauteil gemäß Fig. 7 von oben und
- Fig. 9: das Plattenbauteil gemäß Fig. 7 von unten.

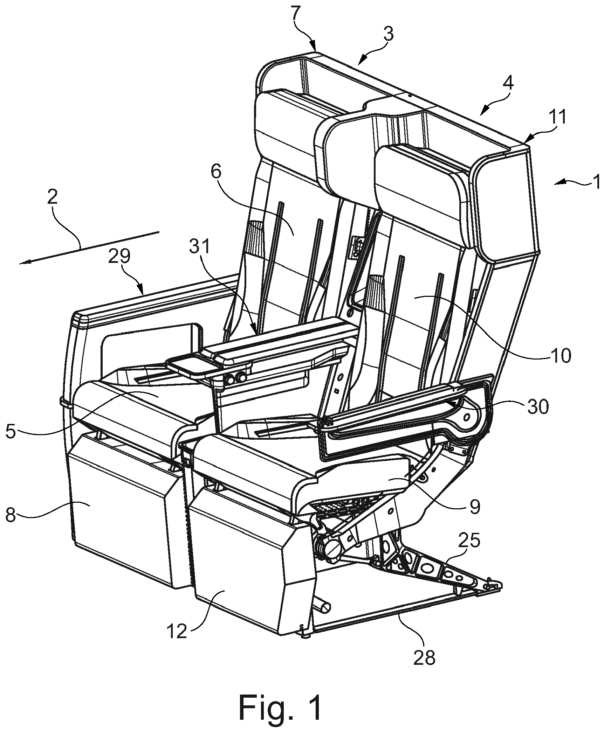

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Die Fluggastsitze 3 und 4 sind über zwei Stützbeine 13 und 14 an einem Kabinenboden einer Flugkabine eines dazugehörigen Flugzeuges montierbar.

Das Stützbein 13 weist hierfür an einem unteren Endbereich 16 einer vorderen Strebe 15 eine Montagestelle 17 und eine weitere Montagestelle 20 an einem unteren Endbereich 19 einer hinteren Strebe 18 auf. Zwischen den Endbereichen 16 und 19 ist ein Verstrebungselement 21 vorgesehen.

Das Stützbein 14 weist an einem unteren Endbereich 23 einer vorderen Strebe 22 eine Montagestelle 24 und eine weitere Montagestelle 27 an einem unteren Endbereich 26 einer hinteren Strebe 25 auf. Zwischen den Endbereichen 23 und 26 ist ein Verstrebungselement 28 vorgesehen.

Die Sitzreihe 1 weist zudem eine äußere Armlehne 29 seitlich am Fluggastsitz 3 und eine äußere Armlehne 30 seitlich am Fluggastsitz 4 auf. Zwischen den beiden Fluggastsitzen 3 und 4 ist vorzugsweise auf Höhe der beiden äußeren Armlehnen 29 und 30 eine Konsole 31 vorhanden, welche von einem Fluggast ebenfalls als Armauflage genutzt werden kann.

In einer Schalenform der jeweiligen Umhausung 7 bzw. 11 ist die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

Die Umhausungen 7 und 11 sind mit weiteren Elementen versehen, z. B. rückseitig jeweils mit Zusatzfunktionen versehen. In einem oberen rückseitigen Bereich der Umhausungen 7, 11 ist beispielsweise jeweils eine Multimedia-Einheit 32 für digitale Medien vorgesehen, zum Beispiel mit einem elektronischen Ein- und Ausgabegerät bzw. mit einem Touchscreen.

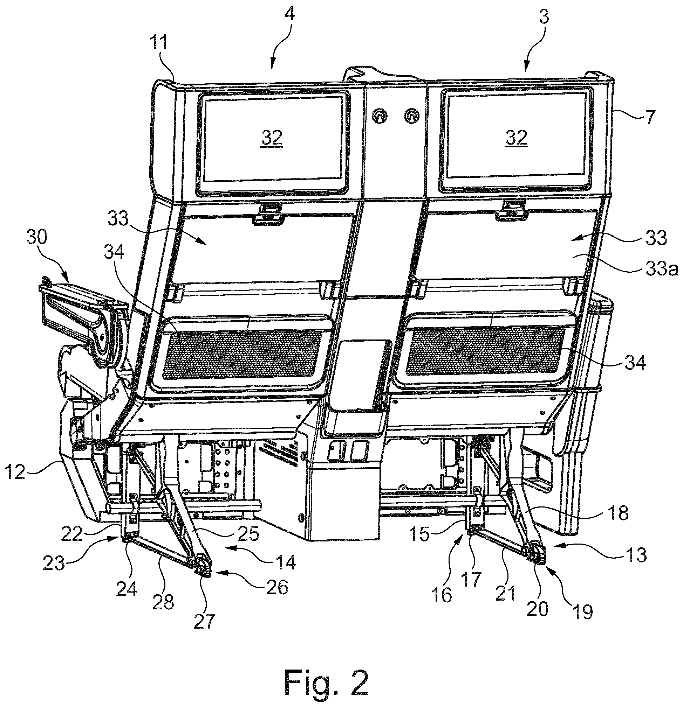

In einem unterhalb an die Multimedia-Einheit 32 anschließenden bzw. mittleren Bereich ist zum Beispiel jeweils eine klappbare Tischplatte 33 für den jeweiligen Fluggastsitz 3 und 4 wie ein Tablett-Tisch ausgebildet. In Fig. 2 sind die Tischplatten 33 in einer nach oben herangeklappten, vertikal stehenden und gesicherten Verstau- bzw. Nichtnutzungs-Stellung dargestellt.

Unterhalb der jeweiligen klappbaren Tischplatte 33 ist ein Staufach 34 beispielswiese zur Unterbringung von Zeitschriften bzw. Prospekten oder anderen Gegenständen vorhanden.

Nachfolgend wird die Tischplatte 33 mit Bezug auf den Fluggastsitz 3 näher erläutert, wobei die Tischplatte 33 am Fluggastsitz 4 identisch aufgebaut ist.

Die Tischplatte 33, die eine in Fig. 2 ersichtliche, außenseitig vorhandene flächige Überdeckung 33a wie zum Beispiel ein dünnes Abdeckelement aufweist, umfasst zwei gelenkig verbundene Plattenbauteile mit einem ersten Plattenbauteil 35 und einem zweiten Plattenbauteil 36. Zur klappbaren Anordnung der Tischplatte 33 an der Umhausung 7 ist ein Beschlag 37 mit einem Beschlagteil 38 und einem weiteren Beschlagteil 39 vorhanden.

Außerdem ist eine Gelenkanordnung mit einem Gelenkorgan 40 und einem weiteren Gelenkorgan 41 zur gelenkigen Verbindung der beiden Plattenbauteile 35 und 36 vorgesehen.

In den vorzugsweise aus einem ursprünglichen Voll-Plattenmaterial hergestellten Plattenbauteilen 35 ist eine Vielzahl von voneinander getrennten Materialausnehmungen 42 ausgebildet. Die Materialausnehmungen 42 bewirken, dass bezogen auf eine in der Dicke D und der Grundrissfläche der Plattenbauteile 35 bzw. 36 entsprechende Vollmaterialplatte, die ein Ausgangs-Volumen aufweist, die Plattenbauteile 35 bzw. 36 jeweils eine reduzierte Masse aufweisen.

Mit Bezug auf das Plattenbauteil 36 sind die Materialausnehmungen 42 auf eine oberseitige Hauptseite 43 und eine gegenüberliegende unterseitige Hauptseite 44 des Plattenbauteils 36 bezogen jeweils offen, wobei die Summe der Volumina sämtlicher Materialausnehmungen 42 auf beiden Hauptseiten 43, 44 in dem Plattenbauteil 36 ein Ausnehmungs-Volumen des Plattenbauteils ergeben, wobei das Ausnehmungs-Volumen des Plattenbauteils mindestens 20 Prozent des Ausgangs-Volumens des entsprechenden Materials des plattenförmigen Voll-Plattenmaterials, das zur Herstellung des Plattenbauteils 36 verwendet wird, beträgt.

Die Hauptseiten 43, 44 sind von einem Bauteil-Rand R begrenzt, mit zu benachbarten Abschnitten des Bauteil-Randes rechtwinklig stehenden jeweils geraden Randabschnitten.

Bei dem Plattenbauteil 36 sind die Ausnehmungen allein durch untereinander gleichartige nutförmige Materialausnehmungen 42a gebildet.

Beim Plattenbauteil 35 sind die Materialausnehmungen 42 insgesamt durch nutförmige Materialausnehmungen 42a, die in der Grundform entsprechend den nutförmige Materialausnehmungen 42a des Plattenbauteils 36 gebildet sind, und zusätzlich durch weitere hier angenähert rechteckige Materialausnehmungen 42b gebildet, die für die Anbringung bzw. Unterbringung der Beschlagteile 38 und 39 in dem Plattenbauteil 35 beidseitig an gegenüberliegenden Seitenrandbereichen existieren.

Die vorteilhafte bereitgestellte, wesentliche Gewichts- und Materialeinsparung in den Plattenbauteilen 35, 36 erfolgt mit den Materialausnehmungen 42a und 42b. Die Materialausnehmungen 42a sind anhand des Plattenbauteils 36 nachfolgend erläutert.

Das im Umriss etwa rechteckige Plattenbauteil 36 weist eine Länge L, eine Breite B und eine Dicke D auf.

Die Hauptseite 43 unterteilt sich auf beispielsweise zwei hier beispielhaft symmetrische gleich große Bereiche 45 und 46 bzw. Hälften. Der Flächeninhalt der beiden Bereiche 45 und 46 ergibt sich aus der Breite B und der halben Länge L, also jeweils aus dem halben Wert des Gesamtflächeninhalts der Hauptseite 43.

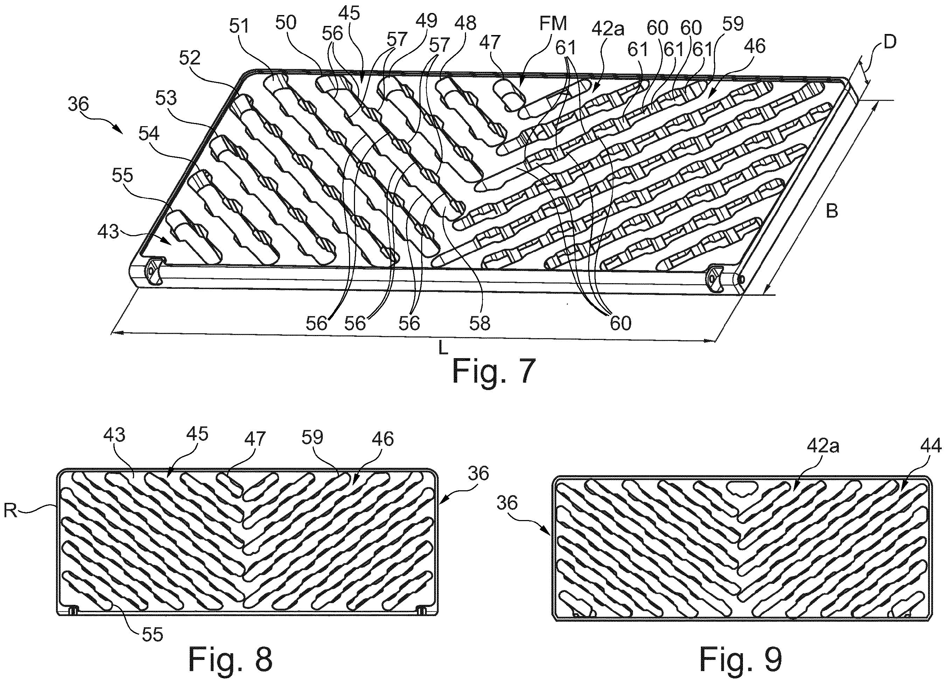

Die Materialausnehmungen 42a sind nach einem Muster ausgebildet, hier in einem Art Fischgrätenmuster FM (s. Fig. 7).

Die gemeinsame Längs-Ausrichtung von Materialausnehmungen 47-55 im ersten Bereich 45 ist demgemäß unterschiedlich bzw. winklig um 90 Winkelgrade versetzt zur gemeinsamen Längs-Ausrichtung der untereinander parallelen Materialausnehmungen im zweiten Bereich 46.

Der erste Bereich 45 weist mehrere erste Materialausnehmungen 42a bzw. 47-55 auf, die untereinander gleich ausgerichtet sind. Die Materialausnehmungen 42a im ersten Bereich 45 umfassen die jeweils länglichen nutförmigen Materialausnehmungen 47-55. Die Materialausnehmungen 47-55 sind in der Form identisch und parallel ausgerichtet untereinander und unterscheiden sich lediglich in der jeweiligen Länge der Materialausnehmungen 47-55.

Die Materialausnehmungen 42a im zweiten Bereich 46 sind spiegelbildlich zu den Materialausnehmungen 47-55 bzw. ebenfalls alle parallel untereinander ausgerichtet und identisch mit jeweils anderer Länge vorhanden.

Jede der Materialausnehmungen 47-55 weist gegenüberliegende Längswände auf, die eine konturierte Form zeigen. Die konturierte Form weist auf die beispielhaft herausgegriffene Materialausnehmung 50 nach innen in die Materialausnehmung etwas hineinstehende Abschnitte 56 und etwas zurückversetzte Abschnitte 57 auf, die alternierend bzw. abwechselnd in Längserstreckung der jeweiligen Materialausnehmung 47-55 sich ausbilden. Die Materialausnehmung 50 weist außerdem einen ebenen Boden 58 auf, über den die gegenüberliegenden Längswände der Materialausnehmung 50 miteinander verbunden sind.

Auf der gegenüberliegenden Hauptseite 44 des Plattenbauteils 36 (s. Fig. 9) sind entsprechende Materialausnehmungen 42a vorhanden, die parallel zu den Materialausnehmungen 47-55 im Bereich 45 und damit auch untereinander verlaufen, jedoch jeweils lateral versetzt, so dass die Materialausnehmungen auf der Hälfte der Hauptseite 44 sich nicht überschneiden bzw. nicht fluchten mit den Materialausnehmungen 47-55 auf der Hälfte der anderen Hauptseite 43.

Damit sind die Materialausnehmungen 42a im Bereich der Hauptseite 44, der dem Bereich 45 der Hauptseite 43 gegenüberliegt, im streifenförmigen Zwischenraum zwischen zwei benachbarten Materialausnehmungen der Materialausnehmungen 47-55 vorhanden. Auf diese Weise ist der geschlossene Boden 58 der Materialausnehmung 50 und aller anderen Materialausnehmungen 47-49, 51-55 und der Materialausnehmungen auf der Hauptseite 44 ausbildbar.

Auf entsprechende Weise sind die Materialausnehmungen im Bereich 46 der Hauptseite 43 und im gegenüberliegenden Bereich der Hauptseite 44 ausgebildet.

Durch die gleichmäßig und identische konturierte Form der Längswände aller Materialausnehmungen 42a bzw. 47-55 auf beiden Hauptseiten 43 und 44 des Plattenbauteils 36 mit den in die jeweilige Materialausnehmung hineinstehenden Abschnitten 56 und mit den zurückversetzten Abschnitten 57 ergeben sich in den Längswänden aller vorhandener Materialausnehmungen im Plattenbauteil 36 Materialfreilassungen bzw. fensterartige materialfeie Abschnitte und zwischen zwei benachbarten Materialfreilassungen jeweils eine Materialbrücke. Beispielhaft für die Materialausnehmung 59 im Bereich 46 der Hauptseite 43 (s. Fig. 7) ergeben sich alternierende Materialfreilassungen 60 und Materialbrücken 61.

Die freien bzw. offenen Materialfreilassungen 60 in den Längswänden bilden in den Längswänden ein regelmäßiges Muster, abwechselnd zu den schmalen stehenbleibenden durchgehenden Materialbrücken 61 in den Längswänden. Die Materialbrücken 61 erstrecken sich senkrecht zwischen den beiden Hauptseiten 43 und 44, wobei die Materialbrücken 61 die beiden Hauptseiten 43 und 44 verbinden.

Die Materialfreilassungen 60 tragen zu dem vergleichsweise großen Anteil des Materialvolumens bei, das am Plattenbauteil 36 herausgenommen ist im Vergleich zum Material eines in der Dicke D und im Umriss entsprechenden plattenartigen Plattenbauteil aus Vollmaterial. Außerdem dienen die Materialbrücken 61 trotz ihres vergleichsweise geringen Anteils an der Gesamtmasse des Plattenbauteils 36 zur mechanischen Stabilisation bzw. Verstärkung bzw. Versteifung des Plattenbauteils 36 bei.

Das Plattenbauteil 35 ist entsprechend dem Plattenbauteil 36 aufgebaut, bis auf die Materialausnehmungen 42b und teils kürzeren Materialausnehmungen 42a.

Entsprechend ist das Plattenbauteil 35 hinsichtlich der Materialausnehmungen 42a ausgestaltet.

Die Summe der Volumina aller Materialausnehmungen 42a in dem Plattenbauteil 36 beträgt mindestens 0,2 x L x B x D bzw. mindestens 20 Prozent des Ausgangsvolumens des Vollmaterials einer Vollmaterialplatte mit dem Gesamt- bzw. Materialvolumen L x B x D.

### Bezugszeichenliste

- 1: Sitzreihe
- 2: Sitzrichtung
- 3: Fluggastsitz
- 4: Fluggastsitz
- 5: Sitzboden
- 6: Rückenlehne
- 7: Umhausung
- 8: Beinauflage
- 9: Sitzboden
- 10: Rückenlehne
- 11: Umhausung
- 12: Beinauflage
- 13: Stützbein
- 14: Stützbein
- 15: Strebe
- 16: Endbereich
- 17: Montagestelle
- 18: Strebe
- 19: Endbereich
- 20: Montagestelle
- 21: Verstrebungselement
- 22: Strebe
- 23: Endbereich
- 24: Montagestelle
- 25: Strebe
- 26: Endbereich
- 27: Montagestelle
- 28: Verstrebungselement
- 29: Armlehne
- 30: Armlehne
- 31: Konsole
- 32: Multimedia-Einheit
- 33: Tischplatte
- 33a: Überdeckung
- 34: Staufach
- 35: Plattenbauteil
- 36: Plattenbauteil
- 37: Beschlag
- 38: Beschlagteil
- 39: Beschlagteil
- 40: Gelenkorgan
- 41: Gelenkorgan
- 42: Materialausnehmung
- 42a: Materialausnehmung
- 42b: Materialausnehmung
- 43: Hauptseite
- 44: Hauptseite
- 45: Bereich
- 46: Bereich
- 47-55: Materialausnehmung
- 56: Abschnitt
- 57: Abschnitt
- 58: Boden
- 59: Materialausnehmung
- 60: Materialfreilassung
- 61: Materialbrücke

## Patentansprüche

1. Tischplatte (33) für einen Fluggastsitz (3, 4), insbesondere Fluggastsitz-Tischplatte, wobei die Tischplatte (33) ein Plattenbauteil (35, 36) mit zwei gegenüberliegenden Hauptseiten (43, 44) umfasst, wobei das Plattenbauteil (35, 36) zumindest im Wesentlichen eine Dicken-Abmessung und eine Grundrissfläche der Tischplatte (33) vorgibt, und wobei die Hauptseiten (43, 44) von einem Bauteil-Rand mit geraden Randabschnitten begrenzt sind, wobei das Plattenbauteil (35, 36) eine Vielzahl von voneinander getrennten Materialausnehmungen (42, 47-55, 59) aufweist, so dass bezogen auf eine in der Dicke und der Grundrissfläche dem Plattenbauteil (35, 36) entsprechende Vollmaterialplatte, die ein Ausgangs-Volumen des Vollmaterials aufweist, das Plattenbauteil (35, 36) eine reduzierte Masse aufweist, wobei die Materialausnehmungen (42, 47-55, 59) auf eine Hauptseite (43, 44) des Plattenbauteils (35, 36) bezogen jeweils offen sind und wobei die Summe der Volumina sämtlicher Materialausnehmungen (42, 47-55, 59) in dem Plattenbauteil (35, 36) ein Ausnehmungs-Volumen des Plattenbauteils (35, 36) ergeben, wobei das Ausnehmungs-Volumen des Plattenbauteils (35, 36) mindestens 20 Prozent des Ausgangs-Volumens beträgt, wobei die Materialausnehmungen (42, 47-55, 59) nach einem regelmäßigen Muster ausgebildet sind, **dadurch gekennzeichnet, dass** die Materialausnehmungen (42, 47-55, 59) sich in der Länge der Erstreckung in Längsrichtung der jeweiligen Materialausnehmung (42, 47-55, 59) voneinander unterscheiden, wobei das Muster zumindest angenähert längliche beziehungsweise linienförmige schmale nutartigeMaterialausnehmungen (42, 47-55, 59) umfasst.

2. Tischplatte nach Anspruch 1, **dadurch gekennzeichnet, dass** mehrere in der Grundrissform längliche Materialausnehmungen (42, 47-55, 59) vorgesehen sind.

3. Tischplatte nach einem der vorhergehenden Ansprüche, **dadurch gekennzeichnet, dass** die Materialausnehmungen (42, 47-55, 59) in Längsrichtung der jeweiligen Materialausnehmung (42, 47-55, 59) winklig zu einem geraden Randabschnitt des Bauteil-Randes ausgerichtet sind.

4. Tischplatte nach einem der vorhergehenden Ansprüche, **dadurch gekennzeichnet, dass** die Materialausnehmungen zu beiden gegenüberliegenden Hauptseiten (43, 44) des Plattenbauteils (35, 36) offen sind.

5. Tischplatte nach einem der vorhergehenden Ansprüche, **dadurch gekennzeichnet, dass** eine Hauptseite (43, 44) zwei Bereiche (45, 46) umfasst, wobei ein erster Bereich (45) mehrere erste Materialausnehmungen (47-55) aufweist, die untereinander gleich ausgerichtet sind, und wobei ein zweiter Bereich (46) mehrere zweite Materialausnehmungen (42a, 59) aufweist, die untereinander gleich ausgerichtet sind, wobei die Ausrichtung der Materialausnehmungen (47-55) im ersten Bereich (45) unterschiedlich ist zur Ausrichtung der Materialausnehmungen (42a, 59) im zweiten Bereich (46).

6. Tischplatte nach einem der vorhergehenden Ansprüche, **dadurch gekennzeichnet, dass** die Materialausnehmungen (42, 47-55, 59) materialfrei sind.

7. Tischplatte nach einem der vorhergehenden Ansprüche, **dadurch gekennzeichnet, dass** auf beiden gegenüberliegenden Hauptseiten (43, 44) des Plattenbauteils (35, 36) jeweils mehrere Materialausnehmungen (42, 47-55, 59) vorhanden sind.

8. Tischplatte nach einem der vorhergehenden Ansprüche, **dadurch gekennzeichnet, dass** eine Hauptseite (43,44) eine flächige Überdeckung (33a) aufweist.

9. Tischplatte nach einem der vorhergehenden Ansprüche, **dadurch gekennzeichnet, dass** an der Tischplatte (33) ein Anbindungsabschnitt (42b) für die-Anbindung eines Beschlags (37) vorgesehen ist, wobei der Beschlag (37) zur beweglichen Lagerung der Tischplatte (33) an einer Aufnahme (7, 11) ausgebildet ist.

10. Tischplatte nach einem der vorhergehenden Ansprüche, **dadurch gekennzeichnet, dass** zwei getrennte und gelenkig miteinander verbundene Plattenbauteile (35, 36) vorhanden.sind.

11. Fluggastsitz (3, 4) mit einer Tischplatte (33) nach einem der vorhergehenden Ansprüche.

## Claims

1. Table panel (33) for an aircraft passenger seat (3, 4), in particular an aircraft passenger seat table panel, wherein the table panel (33) comprises a panel component (35, 36) having two mutually opposite main sides (43, 44), wherein the panel component (35, 36) at least substantially predefines a thickness dimension and a footprint area of the table panel (33), and wherein the main sides (43, 44) are delimited by a component periphery having straight peripheral portions, wherein the panel component (35, 36) has a multiplicity of mutually separated material clearances (42, 47-55, 59) so that the panel component (35, 36) has a reduced mass in relation to a solid material panel that in terms of the thickness and the footprint area corresponds to the panel component (35, 36) and has an initial volume of the solid material, wherein the material clearances (42, 47-55, 59) are in each case open in relation to a main side (43, 44) of the panel component (35, 36), and wherein the sum of the volumes of all material clearances (42, 47-55, 59) in the panel component (35, 36) result in a clearance volume of the panel component (35, 36), wherein the clearance volume of the panel component (35, 36) is at least 20 percent of the initial volume, wherein the material clearances (42, 47-55, 59) are configured according to a regular pattern, **characterized in that** the material clearances (42, 47-55, 59) differ from one another in terms of the length of the extent in the longitudinal direction of the respective material clearance (42, 47-55, 59), wherein the pattern comprises at least approximately elongate, or linear, narrow groovetype material clearances (42, 47-55, 59).

2. Table panel according to Claim 1, **characterized in that** a plurality of material clearances (42, 47-55, 59) which are elongate in terms of the footprint shape are provided.

3. Table panel according to one of the preceding claims, **characterized in that** the material clearances (42, 47-55, 59) in the longitudinal direction of the respective material clearance (42, 47-55, 59) are aligned so as to be angled in relation to a straight peripheral portion of the component periphery.

4. Table panel according to one of the preceding claims, **characterized in that** the material clearances are open towards both mutually opposite main sides (43, 44) of the panel component (35, 36).

5. Table panel according to one of the preceding claims, **characterized in that** a main side (43, 44) comprises two regions (45, 46), wherein a first region (45) has a plurality of first material clearances (47-55) which among one another are identically aligned, and wherein a second region (46) has a plurality of second material clearances (42a, 59) which among one another are identically aligned, wherein the alignment of the material clearances (47-55) in the first region (45) differs from the alignment of the material clearances (42a, 59) in the second region (46).

6. Table panel according to one of the preceding claims, **characterized in that** the material clearances (42, 47-55, 59) are free of material.

7. Table panel according to one of the preceding claims, **characterized in that** a plurality of material clearances (42, 47-55, 59) are present on each of the two mutually opposite main sides (43, 44) of the panel component (35, 36).

8. Table panel according to one of the preceding claims, **characterized in that** a main side (43, 44) has a planar covering (33a).

9. Table panel according to one of the preceding claims, **characterized in that** an attachment portion (42b) for attaching a fitting (37) is provided on the table panel (33), wherein the fitting (37) is configured for movably mounting the table panel (33) on a receptacle (7, 11).

10. Table panel according to one of the preceding claims, **characterized in that** two separate panel components (35, 36) that are connected to one another in an articulated manner are present.

11. Aircraft passenger seat (3, 4) having a table panel (33) according to one of the preceding claims.

## Revendications

1. Plateau de table (33) pour un siège de passager d'avion (3, 4), notamment plateau de table de siège de passager d'avion, le plateau de table (33) comprenant un composant plateau (35, 36) avec deux côtés principaux opposés (43, 44), le composant plateau (35, 36) définissant au moins essentiellement une dimension d'épaisseur et une surface de plan du plateau de table (33), et les côtés principaux (43, 44) étant délimités par un bord de composant avec des sections de bord droites, le composant plateau (35, 36) présentant une pluralité d'évidements de matériau (42, 47-55, 59) séparés les uns des autres, de telle sorte que par rapport à un plateau de matériau plein correspondant en épaisseur et en surface de plan au composant plateau (35, 36), qui présente un volume initial du matériau plein, le composant plateau (35, 36) présente une masse réduite, les évidements de matériau (42, 47-55, 59) étant chacun ouverts par rapport à un côté principal (43, 44) du composant plateau (35, 36), et la somme des volumes de tous les évidements de matériau (42, 47-55, 59) dans le composant plateau (35, 36) donnant un volume d'évidement du composant plateau (35, 36), le volume d'évidement du composant plateau (35, 36) étant d'au moins 20 pour cent du volume initial, les évidements de matériau (42, 47-55, 59) étant réalisés selon un motif régulier, **caractérisé en ce que** les évidements de matériau (42, 47-55, 59) diffèrent les uns des autres par la longueur de l'extension dans la direction longitudinale de l'évidement de matériau respectif (42, 47-55, 59), le motif comprenant des évidements de matériau (42, 47-55, 59) au moins approximativement en forme de rainures étroites allongées ou linéaires.

2. Plateau de table selon la revendication 1, **caractérisé en ce que** plusieurs évidements de matériau (42, 35 47-55, 59) allongés en plan sont prévus.

3. Plateau de table selon l'une quelconque des revendications précédentes, **caractérisé en ce que** les évidements de matériau (42, 47-55, 59) sont orientés dans la direction longitudinale de l'évidement de matériau respectif (42, 47-55, 59) à un angle par rapport à une section de bord droite du bord de composant.

4. Plateau de table selon l'une quelconque des revendications précédentes, **caractérisé en ce que** les évidements de matériau sont ouverts sur les deux côtés principaux opposés (43, 44) du composant plateau (35, 36) .

5. Plateau de table selon l'une quelconque des revendications précédentes, **caractérisé en ce qu'**un côté principal (43, 44) comprend deux zones (45, 46), une première zone (45) présentant plusieurs premiers évidements de matériau (47-55) orientés de la même manière les uns par rapport aux autres, et une deuxième zone (46) présentant plusieurs deuxièmes évidements de matériau (42a, 59) orientés de la même manière les uns par rapport aux autres, l'orientation des évidements de matériau (47-55) dans la première zone (45) étant différente de l'orientation des évidements de matériau (42a, 59) dans la deuxième zone (46).

6. Plateau de table selon l'une quelconque des revendications précédentes, **caractérisé en ce que** les évidements de matériau (42, 47-55, 59) sont exempts de matériau.

7. Plateau de table selon l'une quelconque des revendications précédentes, **caractérisé en ce que** plusieurs évidements de matériau (42, 47-55, 59) sont présents sur chacun des deux côtés principaux opposés (43, 44) du composant plateau (35, 36).

8. Plateau de table selon l'une quelconque des revendications précédentes, **caractérisé en ce qu'**un côté principal (43, 44) présente un recouvrement plat (33a).

9. Plateau de table selon l'une quelconque des revendications précédentes, **caractérisé en ce qu'**il est prévu sur le plateau de table (33) une section d'attache (42b) pour l'attache d'une ferrure (37), la ferrure (37) étant réalisée pour le montage mobile du plateau de table (33) sur un logement (7, 11).

10. Plateau de table selon l'une quelconque des revendications précédentes, **caractérisé en ce que** deux composants plateau (35, 36) séparés et reliés l'un à l'autre de manière articulée sont présents.

11. Siège de passager d'avion (3, 4) avec un plateau de table (33) selon l'une quelconque des revendications précédentes.
